Europäisches Patentamt

European Patent Office

Office européen des brevets

(11) Publication number: **0 121 401**
**B1**

# EUROPEAN PATENT SPECIFICATION

(45) Date of publication of patent specification: 29.06.88

(51) Int. Cl.⁴: **G 02 F 1/015,** G 02 F 1/31, G 02 B 6/10

(21) Application number: 84302084.3

(22) Date of filing: 28.03.84

(54) Light modulation device.

(30) Priority: 31.03.83 JP 56947/83

(43) Date of publication of application:
10.10.84 Bulletin 84/41

(45) Publication of the grant of the patent:
29.06.88 Bulletin 88/26

(84) Designated Contracting States:
DE FR GB IT NL

(56) References cited:
DE-A-2 723 414
"I. Appl. Phys" 49 (1978), pages 5404-5406
"I. Appl. Phys" 51 (1980), pages 1325-1327.
PATENTS ABSTRACTS OF JAPAN, vol. 6, no.
104 (P-122)982r, 15th June 1982; & JP - A - 57
37 327 (NIPPON DENKI K.K.) 01-03-1982
IDEM
DIGEST OF TECHNICAL PAPERS TOPICAL
MEETING ON INTEGRATED OPTICS, 21st-24th
January 1974, New Orleans, Louisiana, pages
WAG-1 - WAG-6, Optical Society of America,
New York, US; F.K. REINHART :"Phase and
intensity modulation properties of AlyGa1-
yAs-AlxGa1-xAs double heterostructure p-n
junction waveguides"
IDEM

(73) Proprietor: SUMITOMO ELECTRIC INDUSTRIES
LIMITED
No. 15, Kitahama 5-chome Higashi-ku
Osaka-shi Osaka 541 (JP)

(72) Inventor: Tada, Kunio
13-9 Minami Urawa 2-chome
Urawa-shi Saitama-ken (JP)
Inventor: Nishiwaki, Yoshikazu c/o OSAKA
WORKS
SUMITOMO ELECTRIC IND. LTD.1-3 Shimaya
1-chome
Konohana-ku Osaka (JP)
Inventor: Matsuoka, Shunji c/o OSAKA WORKS
SUMITOMO ELECTRIC IND. LTD.1-3 Shimaya
1-chome
Konohana-ku Osaka (JP)

(74) Representative: George, Sidney Arthur et al
GILL JENNINGS & EVERY 53-64 Chancery Lane
London WC2A 1HN (GB)

Courier Press, Leamington Spa, England.

## Description

This invention relates to a light modulation device in which light is made to pass through two parallel optical waveguides made of a compound semiconductor, to which modulation voltages are applied to vary the intensity of the light.

When light is made to pass through parallel optical waveguides which are disposed sufficiently close to each other, light energy is exchanged between the waveguides due to the coupling therebetween. That is, as the light travels in the optical waveguides, a portion or all of the light energy in one of the waveguides transfers to the other waveguide, and as the light travels further, the light energy returns to the original waveguide. In this manner, the light energy moves back and forth between the optical waveguides as the light travels therein.

In the case where the optical waveguides are made of a material having an electro-optical effect, when voltages are applied to the optical waveguides the refractive indices of the waveguides vary corresponding to the voltages applied. Since the coupling condition changes, the exchange of the light energy between the optical waveguides can be controlled by the applied voltages. The light output of a single optical waveguide varies corresponding to variation in the voltage applied thereto. Accordingly, light modulation can be achieved by applying voltages to the coupled parallel optical waveguides.

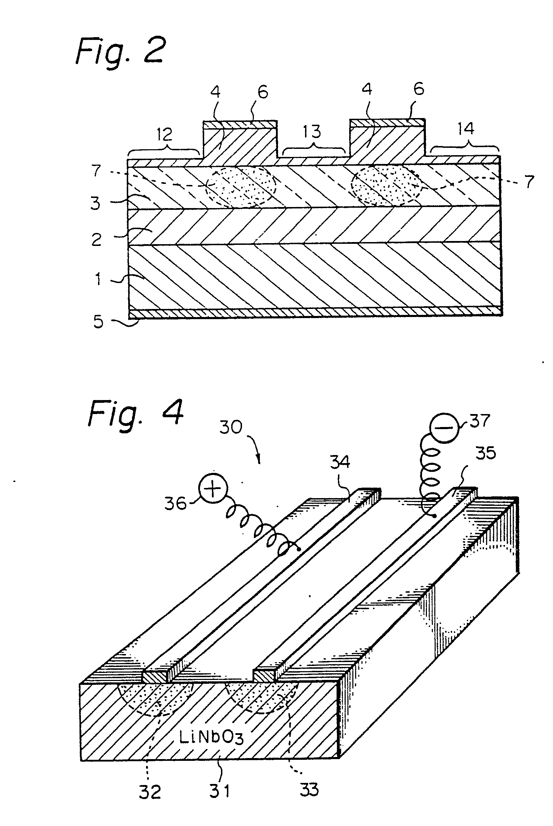

An example of a conventional light modulation device of this kind is shown in Fig. 4 of the accompanying drawings.

A light modulation device 30 in Fig. 4 comprises a $LiNbO_3$ substrate 31 with two optical waveguides 32 and 33, having high refractive indices, formed thereon by selective diffusion of titanium Ti. Electrodes 34 and 35 are formed on the optical waveguides 32 and 33, respectively. Modulation voltages 36 and 37 are applied to the electrodes 34 and 35, respectively, to vary reciprocally the refractive indices of the respective optical waveguides.

The two optical waveguides 32 and 33 are sufficiently close to each other to allow exchange of light energy therebetween. The coupling condition between the optical waveguides varies, corresponding to the modulation voltages, to vary the intensity of the light passing therethrough.

However, the light modulation device 30 has the following disadvantages:

(a) Since there is no difference in resistivity between the $LiNbO_3$ substrate and the optical waveguides 32 and 33 with Ti selectively diffused therein, a large part of the voltage is dropped across the $LiNbO_3$ substrate. As only a small part of the voltage is, therefore, applied to the optical waveguides 32 and 33 proper, the voltages required for modulation are large.

(b) Since the electrodes 34 and 35 are in contact with the optical waveguides 32 and 33, respectively, there is a large loss of light by absorption.

(c) Since the substrate is $LiNbO_3$ instead of a compound semiconductor, it is impossible to mount this light modulation device as well as other optical circuit components, such as a light source, a light detector and the like, on the same substrate. In other words, it cannot be used as a component of a monolithic optical integrated circuit.

The light modulation device described above is disclosed in, for example, an article by R. V. Schmidt and H. Kogelnik entitled "Electro-optically switched coupler with stepped $\Delta\beta$ reversal using Ti-diffused $LiNbO_3$ waveguides" in Applied Physics Letters, Vol. 28, No. 9, 1 May 1976, pp. 503—506.

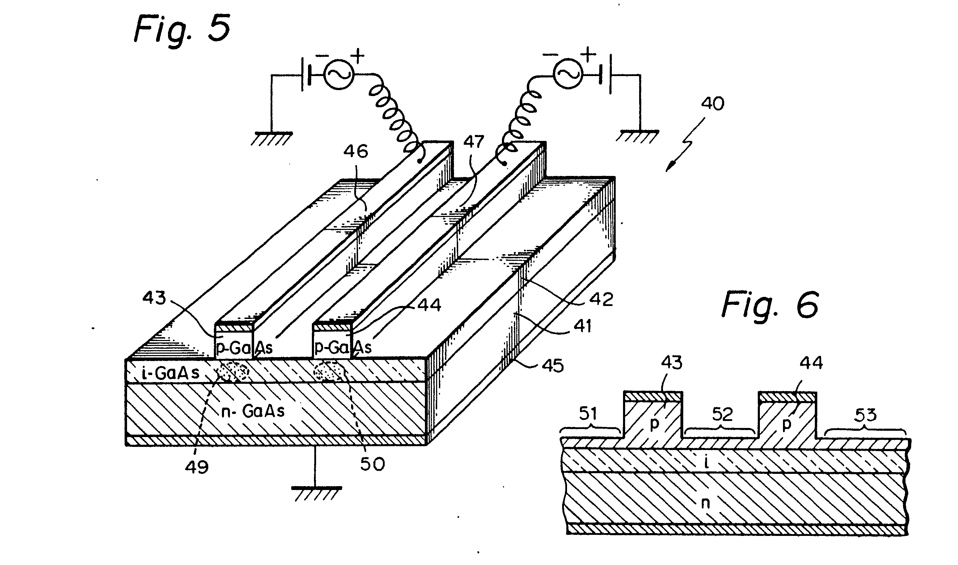

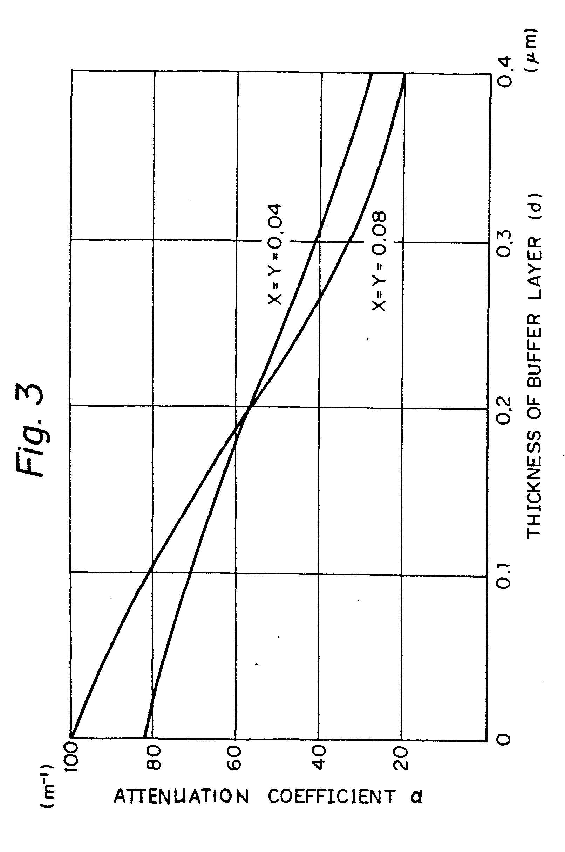

A light modulation device aimed at being monolithic has been proposed, by using a compound semiconductor such as GaAs substrate. An example of a known light modulation device using a GaAs substrate is shown in Fig. 5 of the drawings. A light modulation device 40 comprises an n-type GaAs substrate 41 having an i-type GaAs layer 42 formed thereon, and two parallel bar members 43 and 44 of p-type GaAs formed on the i-type GaAs layer 42. Electrodes 45, 46 and 47 are provided on the substrate 41 and the bar member 43, 44, respectively.

The i-type (intrinsic semiconductor) GaAs layer 42 having a high resistance can capture light and function as an optical waveguide layer.

Furthermore, since the p-type GaAs bar members 43 and 44 are disposed on the i-type GaAs layer 42, regions 49 and 50 directly under the bar members 43 and 44, respectively, have equivalently high refractive indices. Since light is captured in the regions 49 and 50, they function as optical waveguides.

The electrode 45 is grounded. A negative D.C. voltage is applied to the electrodes 46 and 47, and a modulation voltage is also applied thereto. Since the p-n junction is reverse-biased, no current is allowed to flow therebetween.

Since the optical waveguides 49 and 50 are made of i-type GaAs having a low carrier density, a large part of the voltage is applied to the optical waveguides and only a small part is applied to the substrate 41 and the bar members 43, 44.

The light modulation device shown in Fig. 5 has advantages in that it can be used as a component of a monolithic optical integrated circuit since it uses GaAs as the substrate, and in that, since the regions 49 and 50 functioning as optical waveguides are spaced from the electrodes 46 and 47, there is very little loss of light by absorption by the electrode metal and the larger part of the applied voltage is fed to the optical waveguide regions 49 and 50.

On the other hand, however, the light modulation device shown in Fig. 5 has disadvantages, as described below.

The light modulation device 40 is produced by epitaxial growth of an i-type GaAs layer 42 and a p-type GaAs layer on an n-type GaAs wafer. Thereafter, the p-type GaAs layer is etched to leave two parallel square bar-shaped portions which should function as the bar members 43 and 44.

Accordingly, the p-type layer is etched, with the etching time constant, to the boundary between the p-type and the i-type layers to remove the portions other than the bar members 43, 44. Ideally, etching should be performed accurately down to the boundary between the p-type and the i-type layers. In fact, however, since the p-type and the i-type are both of the same GaAs crystal and different only in impurity density, there is no substantial difference in etching rate therebetween.

If over-etching occurs, the i-layer is also etched, and the portion between the two optical waveguides 49 and 50 is removed, thereby destroying the coupling between the waveguides. If under-etching is carried out in order to ensure that the i-layer is not removed, a portion of the p-layer is left unetched on the i-layer. Fig. 6 is a sectional view of the light modulation device showing this state of under-etching. In the under-etched light modulation device shown in Fig. 6, residual p-layers 51, 52 and 53 are present, adjacent the p-type bar members 43 and 44. Since a p-layer is of a lower specific resistance than an i-layer, the residual p-layers 51, 52 and 53 are substantially equipotential to the bar members 43, 44. The voltage is applied widely between the p-layers and the n-type substrate 41, so that it is no longer possible to concentrate the applied voltage on the optical waveguide regions 49 and 50 alone.

The D.C. component of the applied voltage to reverse-bias the p-n junction is supplied between the p-layers and the n-type substrate, and is applied to the whole i-layer.

The modulation voltages are, unlike the voltage of the D.C. component, applied to the electrodes of the p-type bar members with opposite polarities. These A.C. components are, however, short-circuited by the intermediate residual p-layer 52, which has a low resistance. Accordingly, the modulation electric field hardly extends into the optical waveguide regions 49 and 50, and the modulation ability of the advance is therefore lost.

The light modulation device shown in Fig. 5 is therefore difficult to manufacture, because the etching process must be carried out very accurately.

The light modulation device described above is disclosed in, for example, an article by A. Carenco and L. Menigaux entitled "GaAs homojunction rib waveguide directional coupler switch" in J. Appl. Phys, 51(3), March 1980, pp. 1325—1327.

The following properties are generally required for a light modulation device:
(a) that light can be captured in an optical waveguide layer; and
(b) that most of the applied voltage shall reach the optical waveguide layer.

In the conventional light modulation device shown in Fig. 5, in order to capture the light, a difference in carrier density is produced in the GaAs crystal to utilize the phenomenon that the refractive index is higher in the portion having a lower carrier density. For this reason, it has a p-i-n structure. That is, the condition (a) above is accomplished by utilizing the difference in carrier density. The condition (b) is also related directly to specific resistance or carrier density of each of the layers. The i-layer (intrinsic semiconductor) has a higher specific resistance than any of the n- and p-layers. In using the i-layer as the optical waveguide, this is not contradictory to the condition (b) because in the laminated structure of the p-i-n layers, when voltages are applied to the p-n junction in opposite directions, the major part of the voltages is applied to the i-layer.

In this known technique, the difference in carrier density is produced skillfully in the GaAs crystal to satisfy the conditions (a) and (b) at the same time.

However, since only one parameter, i.e. the carrier density, is used to satisfy the two conditions, this known light modulation device has the disadvantage that the number of parameters is insufficient to provide satisfactory control.

The difficulty in the etching process described hereinabove is, after all, due to the insufficient number of parameters.

The inventors of the present invention have found that the above-mentioned disadvantage can be overcome if the two conditions required for the optical waveguides of a light modulation device are satisfied independently of each other by operating on separate parameters.

An object of the present invention is to provide a light modulation device which has limited loss of light by absorption and is adapted to be used as a monolithic optical integrated circuit.

According to the invention, there is provided a directionally coupling light modulation device, comprising a substrate of a compound semiconductor crystal having a high carrier density; an optical waveguide layer of a compound semiconductor crystal having a low carrier density; two buffer layers of a compound semiconductor crystal epitaxially grown on the optical waveguide layer, the buffer layers being formed as two closely-spaced parallel bars by etching away unwanted regions of the compound semiconductor crystal; an electrode in ohmic contact with the substrate; and electrodes in Schottky contact with the buffer layers, respectively; the semiconductor composition ratio of the optical waveguide layer relative to the compositions of the adjacent semiconductor compounds being chosen sufficiently different to achieve refractive index differences providing confinement of the light in this layer; characterised in that a substrate layer of a compound semiconductor crystal having a high carrier density is mounted on the substrate; that the optical waveguide layer is mounted on the substrate layer; that the buffer layers have a low carrier density; that the substrate and the layers are either all of n-type or all of p-type semiconductor;

and that the optical waveguide layer has a refractive index at least approximately 0.1% higher than any of those of the substrate layer and the buffer layers.

In a preferred embodiment of the invention, a light modulation device is produced by forming an epitaxial $Ga_{1-x}Al_xAs$ on a GaAs substrate, considering that a single GaAs crystal and a $Ga_{1-x}Al_xAs$ crystal are substantially identical to each other in crystal structure, lattice distance, thermal expansion and the like. In this case, since GaAs has a larger refractive index than $Ga_{1-x}Al_xAs$, light can be captured in GaAs by interposing GaAs between $Ga_{1-x}Al_xAs$ layers. This property has been utilized in double-heterostructure laser diodes and the like. Since the refractive index of $Ga_{1-x}Al_xAs$ decreases as the value x increases, composition ratios of the crystals are made different from each other to capture the light in the optical waveguides.

That is, the composition ratios of the crystals are·utilized as parameters for the first condition to capture the light in the optical waveguide. On the other hand, the second condition that most of the applied voltage is applied locally to the optical waveguide resolves itself into a question of specific resistance of the crystal. That is, the optical waveguide is required to have a higher specific resistance than the other layers. Accordingly, carrier density is used as the parameter for the second condition.

The light modulation device of the present invention has no p-n junction, but has a common type of carrier through all the layers. That is, all of the layers of the light modulation device are formed either of n-type semiconductors or p-type semiconductors. The parameters determining the properties of these semiconductor layers are the composition ratios of Ga, Al and the carrier densities.

An embodiment of the invention will now be described, by way of example, with reference to the accompanying drawings, in which:

Fig. 1 is a perspective view of a light modulation device according to the present invention showing an end thereof in cross section;

Fig. 2 is a cross-sectional view of the light modulation device showing the state in which under-etched buffer layers are remaining on the optical waveguide layer;

Fig. 3 is a graph showing the relationship between the thickness of the buffer layer and the loss of light due to absorption by the electrode, in which the horizontal axis denotes the thickness (μm) of the buffer layer and the vertical axis denotes the attenuation coefficient $a$ $(m^{-1})$;

Fig. 4 is a perspective view of a conventional light modulation device as described above, produced by selectively diffusing Ti on a $LiNbO_3$ substrate, showing an end in cross section;

Fig. 5 is a perspective view of another conventional light modulation·device as described above, made of a GaAs crystal having a p-i-n junction, showing an end in cross section; and

Fig. 6 is a cross-sectional view of the conventional light modulation device of Fig. 5, showing the state in which under-etched p-type layers are left on the i-type layer.

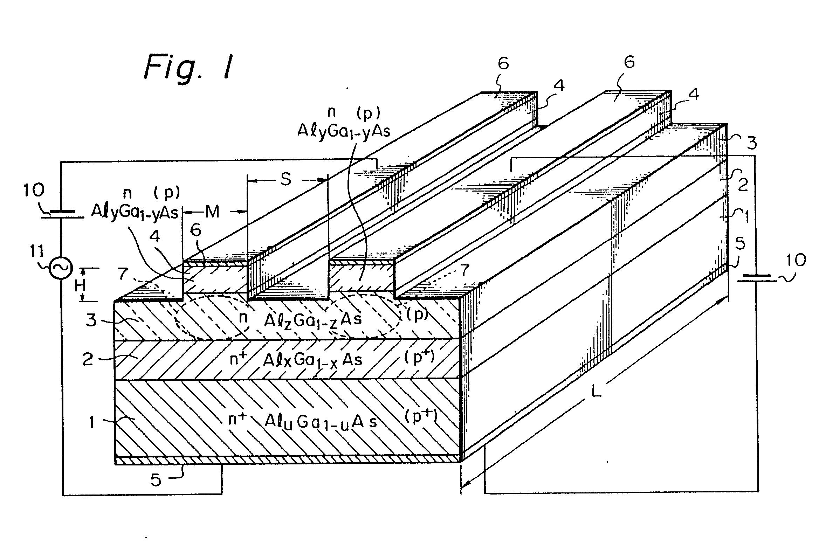

Referring to Fig. 1 of the drawings, a light modulation device according to the present invention comprises, from the bottom upwards, an ohmic electrode 5, a substrate 1 of $n^+(p^+)$ $Al_uGa_{1-u}As$, a substrate layer 2 of $n^+(p^+)$ $Al_xGa_{1-x}As$, an optical waveguide layer 3 of n(p) $Al_zGa_{1-z}As$, buffer layers 4 of n(p) $Al_yGa_{1-y}As$ and Schottky electrodes 6.

In order to capture the light effectively, the optical waveguide layer 3 is required to be sufficiently higher, i.e. at least approximately 0.1% higher, in refractive index than the buffer layers 4 and the substrate layer 2 holding the layer 3 partially therebetween. This is equivalent to requiring that z be made sufficiently smaller than either of x and y.

Due to the substrate layer 2, the composition ratio of the substrate 1 can be arbitrarily determined. Since GaAs wafers are readily obtainable, both the substrate 1 and the optical waveguide 3 can be of GaAs. In such a case, if the Al ratios x and y of the substrate layer 2 and the buffer layers 4, respectively, are positive, the optical waveguide layer 3 can capture the light therein effectively.

The terms "n" and "p" denote n-type semiconductor and p-type semiconductor, respectively. The terms "$n^+$" and "$p^+$" denote portions at which carrier density is especially higher than n and p, respectively. The term "n(p)" means that either n-type or p-type can be used but they cannot be mixed with each other, that is, it is required that the layers are either all of n-type ($n^+$-$n^+$-n-n) or all of p-type ($p^+$-$p^+$-p-p).

The carrier density is high, preferably of the order of $10^{17}/cm^3$, in the substrate layer 2 and in the substrate 1. On the other hand, in the buffer layers 4 the carrier density is low, for example of the order of $10^{15}/cm^3$.

The optical waveguide layer 3 forms, in its upper region, portions of each of two adjacent parallel bar members. Two thin buffer layers 4 are provided on the bar members by epitaxial growth.

In the planar optical waveguide layer 3, the equivalent refractive index is high in waveguide regions 7 which are located directly under the buffer layers 4, whereby light is localized in the waveguide regions 7.

The buffer layers 4 and the electrodes 6 mounted thereon are in Schottky contact with each other. In order that the electrodes 6 shall be Schottky electrodes, they are made of, for example, aluminium.

The electrode 5 attached to the substrate 1 is in ohmic contact therewith and is made of, for example, Au or Au-Ge alloy.

Relative to the electrode 5 of the substrate 1, a negative bias voltage is applied to each of the Schottky electrodes 6 by a negative D.C. source 10. A source of modulation voltage 11 is provided to apply a modulation voltage to one of the Schottky electrodes 6 as shown in Fig. 1. Alternatively, two modulation voltage sources 11 which are opposite in polarity may be provided to apply modulation voltages to the Schottky electrodes 6 respectively.

Since the Al ratio z of the optical waveguide layer 3 is lower than the Al ratios of the buffer layers 4 and the substrate layer 2, the optical waveguide layer 3 has a higher refractive index than these layers adjacent thereto and is capable of capturing light therein effectively.

Since the waveguide regions 7 through which light travels are connected with each other through the optical waveguide layer 3, there is coupling therebetween to allow the exchange of light energy.

Since the buffer layers 4 isolate light from the metal electrodes, loss of light due to absorption by the metal electrodes is reduced.

The light modulation device shown in Fig. 1 has no particular p-n junction. However, since the electrodes 6 are in Schottky contact with the buffer layers, and a negative voltage is applied to the schottky electrode 6, little current flows therethrough.

Modulation voltages are applied to the buffer layers 4 which have a high specific resistivity, and to the optical waveguide layer 3. Particularly, most of each modulation voltage is applied to the waveguide region 7 directly under the respective buffer layer.

In the light modulation device according to the present invention, the composition ratios of Al and Ga are made different layer by layer to capture light in the optical waveguide layer. In order that the applied voltages are applied mainly to the optical waveguide layer, the optical waveguide layer 3 and the buffer layers 4 are low in carrier density.

A considerable advantage of the light modulation device according to the present invention is strict control of the etching process of the buffer layers is not required. It is not especially necessary that etching be performed exactly to the boundaries between the optical waveguide layer 3 and the buffer layers 4 without any excess or deficiency.

In the case where broad buffer layers remain due to under-etching, as shown in the section of Fig. 2, when a voltage is applied between the electrodes the residual buffer layers 12, 13 and 14 are not at the same potential as the buffer layers 4 of the waveguide regions because the buffer layers 4 are of high resistance and, accordingly, a strong electric field is not applied to any portions other than the waveguide regions 7 of the optical waveguide layer 3.

On the other hand, since the substrate layer 2 and the substrate 1 are of low resistance, little voltage is applied across these portions.

Furthermore, the process of etching the buffer layers 4 is made easier in the present invention because of the absence of the requirement for accurate etching to remove the material from the buffer layers without any excess or deficiency. This is an advantage of the light modulation device according to the present invention over that of the conventional device shown in Fig. 5.

The buffer layers 4 may be very thin because they are for keeping light away from the electrodes.

Fig. 3 shows the variation of longitudinal attenuation coefficient $\alpha$ of light with variation of the thickness d of the buffer layers. Al composition ratios y, x of the buffer layers and the substrate layer, respectively, are 0.04 or 0.08. The substrate and the optical waveguide layer are of GaAs ($u=z=0$). The wavelength of the light is 1.06 μm.

The attenuation coefficient $\alpha$ of the light denotes the degree of attenuation in the intensity of the light as the light passing through the optical waveguide propagates longitudinally (unit: $m^{-1}$). As seen from Fig. 3, the absorption loss of the light is sufficiently small when the thickness of the buffer layer is approximately 0.3 μm or more.

An example of a light modulation device according to the present invention comprises the following layers:

| | | |
|---|---|---|
| Substrate | GaAs | |
| Substrate layer | $Al_{0.04}Ga_{0.96}As$ | |
| Optical waveguide layer | GaAs | 1.5 μm thick |
| Buffer layers | $Al_{0.04}Ga_{0.96}As$ | 0.4 μm thick |
| Distance S between bar members | 4 μm | |
| Width M of each bar member | 4 μm | |
| Height H of each bar member | 0.5 μm | |

This is therefore an example of the embodiment shown in Fig. 1 in which $x=y=0.04$, $u=z=0$, and the length of the device L was 7.4 mm.

The electron density was $5\times10^{17}cm^{-3}$ in the substrate and the substrate layer, and $2\times10^{15}cm^{-3}$ in the buffer layer and the optical waveguide layer, with a specific resistance of $4\times10^{-3}$ Ωcm and $6\times10^{-1}$ Ωcm, respectively.

Thus, a light modulation device having a switching voltage of 11V, a capacitance of 2.0 pF, a modulation band $\Delta f$ of 3.2 GHz, and drive power per unit bandwidth ratio $P/\Delta f$ of 100 μW/MHz was obtained.

While the embodiments of the present invention have been described with respect to a GaAs compound semiconductor, a device of similar construction can be produced with other compound semiconductors, such as InP and the like.

The light modulation device according to the present invention can be utilized in a single unit for external modulation of a light emitting device as a transmitter in optical communication, and as a modulation device in an analogue waveform sampler, a laser printer, or an optical disc. It can be used also as one of the functional devices of another light modulation device.

## Claims

1. A directionally coupling light modulation device, comprising a substrate (1) of a compound semiconductor crystal having a high carrier density; an optical waveguide layer (3) of a compound semiconductor crystal having a low carrier density; two buffer layers (4) of a compound semiconductor crystal epitaxially grown on the optical waveguide layer, the buffer layers being formed as two closely-spaced parallel bars by etching away unwanted regions of the compound semiconductor crystal; an electrode (5) in ohmic contact with the substrate (1); and electrodes (6) in Schottky contact with the buffer layers, respectively; the semiconductor composition ratio of the optical waveguide layer relative to the compositions of the adjacent semiconductor compounds being chosen sufficiently different to achieve refractive index differences providing confinement of the light in this layer; characterised in that a substrate layer (2) of a compound semiconductor crystal having a high carrier density is mounted on the substrate; that the optical waveguide layer is mounted on the substrate layer; that the buffer layers have a low carrier density; that the substrate and the layers are either all of n-type or all of p-type semiconductor; and that the optical waveguide layer has a refractive index at least approximately 0.1% higher than any of those of the substrate layer and the buffer layers.

2. A device as claimed in claim 1, characterised in that the substrate (1) is of $n^+Al_uGa_{1-u}As$; the substrate layer (2) is of $n^+Al_xGa_{1-x}As$; the optical waveguide layer (3) is of $nAl_zGa_{1-z}As$; and the buffer layers (4) are of $nAl_yGa_{1-y}As$.

3. A device as claimed in claim 1, characterised in that the substrate (1) is of $p^+Al_uGa_{1-u}As$; the substrate layer (2) is of $p^+Al_xGa_{1-x}As$; the optical waveguide layer (3) is of $pAl_zGa_{1-z}As$; and the buffer layers (4) are of $pAl_yGa_{1-y}As$.

4. A device as claimed in claim 2 or claim 3, characterised in that the carrier density is approximately $10^{17}/cm^3$ in the substrate (1) and in the substrate layer (2), and approximately $10^{15}/cm^3$ in the optical waveguide layer (3) and in the buffer layers (4).

5. A device as claimed in claim 1, characterised in that the substrate (1), the substrate layer (2), the optical waveguide layer (3), and the buffer layers (4) are formed of an InP compound semiconductor crystal.

## Patentansprüche

1. Direktgekoppeltes Lichtmodulationselement, bestehend aus einem Substrat (1), aus einem Halbleiterkristallmaterial mit einer hohen Trägerdichte, einer optischen Wellenleiterschicht (3) aus einem Halbleiterkristallmaterial mit einer niedrigen Trägerdichte, zwei auf der optischen Wellenleiterschicht epitaxial aufgebrachten Pufferschichten (4) aus einem Halbleiterkristallmaterial, welche in Form von zwei unmittelbar benachbarten parallelen Stegen durch Wegätzen der ungewünschten Bereiche des Halbleiterkristallmaterials hergestellt sind, einer mit dem Substrat (1) in ohmschen Kontakt stehenden Elektrode (5), sowie mit den beiden Pufferschichten in Schottky-Kontakt stehenden Elektroden (6), wobei die Halbleiterzusammensetzung der optischen Wellenleiterschicht im Vergleich zu den Zusammensetzungen der benachbarten Halbleiterschichten ausreichend unterschiedlich gewählt ist, um im Hinblick auf die Führung des lichts innerhalb der Wellenleiterschicht die erforderlichen Unterschiede des Reflexionsindexes zu erreichen, dadurch gekennzeichnet, daß auf dem Substrat eine Substratschicht (2) aus Halbleiterkristallmaterial mit hoher Trägerdichte aufgebracht ist, auf welcher die optische Wellenleiterschicht wiederum aufgesetzt ist, daß die beiden Pufferschichten eine niedrige Trägerdichte aufweisen, daß das Substrat und die Schichten entweder alle aus einem Halbleitermaterial des n-Typs oder des p-Typs hergestellt sind, und daß die optische Wellenleiterschicht einen Reflexionsindex aufweist, welcher wenigstens 0,1% größer als der der Substratschicht und der Pufferschichten ist.

2. Element nach Anspruch 1, dadurch gekennzeichnet, daß das Substrat (1) aus $n^+Al_uGa_{1-u}As$ besteht, daß die Substratschicht (2) aus $n^+Al_xGa_{1-x}As$ besteht, daß die optische Wellenleiterschicht (3) aus $nAl_zGa_{1-z}As$ besteht, während die Pufferschichten (4) aus $nAl_yGa_{1-y}As$ aufgebaut sind.

3. Element nach Anspruch 1, dadurch gekennzeichnet, daß das Substrat (1) aus $p^+Al_uGa_{1-u}As$ besteht, daß die Substratschicht (2) aus $p^+Al_xGa_{1-x}As$ besteht, daß die optische Wellenleiterschicht (3) aus $pAl_zGa_{1-z}As$ besteht, während die Pufferschichten (4) aus $pAl_yGa_{1-y}As$ aufgebaut sind.

4. Element nach Anspruch 2 oder 3, dadurch gekennzeichnet, daß die Trägerdichte innerhalb des substrats (2) und der Substratschicht (2) ungefähr $10^{17}/cm^3$ beträgt, während die Trägerdichte innerhalb der optischen Wellenleiterschicht (3) und der Pufferschichten (4) ungefähr $10^{15}/cm^3$ beträgt.

5. Element nach Anspruch 1, dadurch gekennzeichnet, daß das Substrat (1), die Substratschicht (2), die optische Wellenleiterschicht (3) und die Pufferschichten (4) aus einem InP-Halbleiterkristallmaterial aufgebaut sind.

# 0 121 401

**Revendications**

1. Un dispositif de modulation de lumière à couplage orienté, comprenant un substrat (1) d'un cristal semi-conducteur composé ayant une densité de porteurs élevé; une couche (3) de guides d'ondes optiques d'un cristal semi-conducteur composé ayant une densité de porteurs faible; deux couches tampons (4) d'un cristal semi-conducteur composé à croissance épitaxiale sur la couche de guides d'ondes optiques, les couches tampons étant formées en deux barres parallèles espacées de façon proche par retrait de régions non souhaitées du cristal semi-conducteur composé; une électrode (5) en contact ohmique avec le substrat (1); et des électrodes (6) en contact de Schottky avec les couches tampons, respectivement; le taux de composition en semiconducteur de la couche de guides d'ondes optiques par rapport aux compositions des composés en semiconducteur adjacent étant choisi suffisamment différent pour accomplir des différences d'indice de réfraction produisant un confinement de la lumière dans cette couche; caractérisé en ce qu'une couche de substrat (2) d'un cristal semi-conducteur composé ayant une densité de porteurs élevée est montée sur le substrat; que la couche de guides d'ondes optiques est montée sur la couche de substrat; que les couches tampons ont une densité de porteurs faible; que le substrat et les couches sont soit tous d'un semiconducteur du type n, soit tous d'un semiconducteur du type p; et que la couche de guides d'ondes optiques a un indice de réfraction au moins approximativement plus élevé de 0,1% qu n'importe quel de ceux de la couche de substrat et des couches tampons.

2. Un dispositif selon la revendication 1, caractérisé en ce que le substrat (1) est en $n^+Al_uGa_{1-u}As$; la couche de substrat (2) est en $n^+Al_xGa_{1-x}As$; la couche (3) de guides d'ondes optiques est en $nAl_zGa_{1-z}Al$; et les couches tampons (4) sont en $nAl_yGa_{1-y}As$.

3. Un dispositif selon la revendication 1, caractérisé en ce que le substrat (1) est en $p^+Al_uGa_{1-u}As$; la couche de substrat (2) est en $p^+Al_xGa_{1-x}As$; la couche (3) de guides d'ondes optiques est en $pAl_zGa_{1-z}As$; et les couches tampons (4) sont en $pAl_yGa_{1-y}As$.

4. Un dispositif selon la revendication 2 ou la revendication 3, caractérisé en ce que la densité de porteurs est approximativement de $10^{17}/cm^3$ dans le substrat (1) et dans la couche de substrat (2), et approximativement de $10^{15}/cm^3$ dans la couche (3) de guides d'ondes optiques et dans les couches tampons (4).

5. Un dispositif selon la revendication 1, caractérisé en ce que le substrat (1), la couche de substrat (2), la couche (3) de guides d'ondes optiques, et les couches tampons (4) sont formés d'un cristal semi-conducteur composé InP.

Fig. 1

n (p)
$Al_yGa_{1-y}As$

S

n (p)
$Al_yGa_{1-y}As$ — M

$n$ $Al_zGa_{1-z}As$ (p)

$n^+$ $Al_xGa_{1-x}As$ ($p^+$)

$n^+$ $Al_uGa_{1-u}As$ ($p^+$)

0 121 401

*Fig. 2*

*Fig. 4*

Fig. 5

Fig. 6

Fig. 3